# EUROPÄISCHE PATENTSCHRIFT

(11) **EP 2 939 512 B1**
(45) Veröffentlichungstag und Bekanntmachung des Hinweises auf die Patenterteilung: **07.12.2016**
(21) Anmeldenummer: 15401033.4
(22) Anmeldetag: 27.04.2015
(51) Int. Cl.: A01C 17/00

(54) **SCHLEUDERDÜNGERSTREUER MIT EINEM DREHWINKELSENSOR**
CENTRIFUGAL FERTILIZER SPREADER WITH A ROTATION ANGLE SENSOR
ÉPANDEUR D'ENGRAIS CENTRIFUGE DOTÉ D'UN CAPTEUR D'ANGLE DE ROTATION

(30) Priorität: 30.04.2014 DE 102014106049
(43) Veröffentlichungstag der Anmeldung: 04.11.2015
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- EP-A1- 1 293 114
- DE-A1- 4 106 560
- DE-C2- 4 105 059

## Beschreibung

Die Erfindung betrifft einen Schleuderdüngerstreuer mit den Merkmalen des Oberbegriffs von Anspruch 1.

Ein derartiger Schleuderdüngerstreuer ist beispielsweise aus der EP 2 311 303 B1 bekannt. Dabei fällt eine bestimmte Düngermenge aus einem Vorratsbehälter durch eine verstellbare Dosieröffnung auf eine Schleuderscheibe. Durch die Rotation der Schleuderscheibe und die daran angeordneten Wurfarme wird anschließend der Dünger in einem breiten Streufächer auf dem Feld verteilt. Die Dosieröffnung ist dabei in der Bodenplatte des Vorratsbehälters ausgebildet und kann mit einem Schieber in der Größe manuell oder mit einem Motor verstellt werden.

Ein ähnlicher Schleuderdüngerstreuer ist in der DE 41 05 059 C2 offenbart. Ein Motor greift an einem Hebel des Schiebers an und schwenkt diesen um eine Schieberdrehachse. Um die Position des Schiebers zu erfassen, ist einerseits ein Endanschlag vorgesehen und andererseits eine Signalscheibe an der Abtriebswelle des Getriebemotors. Die Signalscheibe weist am Außenrand Zähne auf, die mittels einer Lichtschranke detektiert werden.

Nachteilig bei derartigen Schleuderdüngerstreuern ist, dass die Position des Schiebers und damit die Größe der Dosieröffnung nicht immer reproduzierbar erfasst werden kann. Dadurch kommt es gelegentlich zu einer Über- oder Unterdüngung. Des Weiteren sind derartige Getriebemotoren mit einer integrierten Signalscheibe und Lichtschranke vergleichsweise aufwändig in der Herstellung. Aufgabe der vorliegenden Erfindung ist es daher, einen Schleuderdüngerstreuer mit einer präzis einstellbaren Dosierung bereitzustellen, der weniger aufwändig in der Herstellung ist.

Diese Aufgabe wird bei einem Schleuderdüngerstreuer mit den Merkmalen des Oberbegriffs von Anspruch 1 mit den Merkmalen des kennzeichnenden Teils gelöst, gemäß dem ein Drehwinkelsensor zur Erfassung der Schieberposition an der Schieberdrehachse angeordnet ist.

Dadurch, dass der Drehwinkelsensor an der Schieberdrehachse angeordnet ist, kann die Schieberposition direkt ohne zwischengelagerte Getriebeelemente erfasst werden. Bei dieser Anordnung wird die Schieberposition nicht durch ein Getriebespiel bzw. durch eine Hysterese abhängig von der Motordrehrichtung verfälscht und kann besonders präzise erfasst werden. Da so die Schieberposition sehr genau bekannt ist, kann auch die Stellung des Schiebers und damit die Größe der Dosieröffnung genau geregelt werden und die Dosierung des Düngers auf die Schleuderscheibe ist besonders präzise. Darüber hinaus muss der Drehwinkelsensor nicht mit dem Antrieb integriert werden und ist damit kostengünstiger.

Der Schleuderdüngerstreuer kann mit einem landwirtschaftlichen Schlepper koppelbar sein. Das Verteilorgan kann eine Schleuderscheibe und/oder Wurfarme zur Verteilung des Düngers auf dem Feld umfassen. Die Schleuderscheibe kann mittels eines Rotationsantriebs drehbar sein, um den Dünger mittels zentrifugaler Kräfte zu verteilen. Der Vorratsbehälter kann wenigstens teilweise als sich nach unten verjüngender Trichter ausgebildet sein, an dessen unterem Ende die Dosieröffnung angeordnet ist. Dadurch rutscht der Dünger durch seine eigene Schwerkraft in dem sich verjüngenden Trichter nach unten und fällt durch die Dosieröffnung auf das Verteilorgan. Dadurch ist es nicht notwendig, den Dünger mit einer speziellen Fördereinrichtung aktiv an das Verteilorgan zu fördern.

Der Schieber und der Hebel können auf der gleichen Seite oder auf gegenüberliegenden Seiten der Drehachse angeordnet sein. Der Schieber und der Hebel können einteilig ausgebildet sein, insbesondere als planes oder umgeformtes Blechteil. Das zur Schieberdrehachse abgewandte Ende des Hebels kann über ein Gelenk mit dem Antrieb verbunden sein, wobei das Gelenk insbesondere einen Gelenkbolzen umfasst.

Der Antrieb kann ein elektrischer Linearantrieb sein. Denkbar ist auch ein hydraulischer oder ein pneumatischer Antrieb.

Der Drehwinkelsensor kann ein Gehäuse und ein dem gegenüber drehbares Teil umfassen, das mit dem Schieber verbunden ist. Der Drehwinkelsensor kann einen Sensor umfassen, der die Position des drehbaren Teils gegenüber dem Gehäuse erfasst.

Der Drehwinkelsensor kann konzentrisch zur Schieberdrehachse angeordnet sein. Dadurch kann der Drehwinkelsensor ohne Übersetzungselemente mit dem Schieber verbunden sein. Eine Schieberwelle kann zur Lagerung des Schiebers um die Schieberdrehachse ausgebildet sein. Die Schieberwelle kann ein Gelenkbolzen sein, über den der Schieber mit einer Bodenplatte des Vorratsbehälters verbunden ist. Insbesondere kann der Drehwinkelsensor an einem Ende der Schieberwelle angeordnet sein.

Der Drehwinkelsensor kann ein Potentiometer umfassen. Dadurch ist der Drehwinkelsensor besonders einfach aufgebaut und über den veränderbaren Widerstand des Potentiometers kann die Schieberposition besonders einfach erfasst werden.

Die Dosieröffnung kann durch eine Platte mit einer festen Öffnung und den Schieber gebildet sein, wobei der Schieber scherenartig gegenüber der festen Öffnung verstellbar ist. Durch die Form der festen Öffnung und eine Kante des Schiebers kann die Dosierungskennlinie besonders geeignet vorgegebenen werden. Die feste Öffnung der Platte kann an der Berandung einen Dichtring, ein Dichtlippenelement oder einen Wulst umfassen, mit dem der Schieber in Kontakt steht. Dadurch kann sich der Dünger nicht zwischen der Platte und dem Schieber verklemmen und es ergibt sich ein besonders geringer Widerstand beim Öffnen und Schließen des Schiebers.

Ein feststehender Teil des Drehwinkelsensors kann mit der Platte und ein drehbarer Teil des Drehwinkelsensors kann mit dem Schieber verbunden sein. Der feststehende Teil kann insbesondere das Gehäuse des Drehwinkelsensors sein.

Die Dosieröffnung kann in einer Bodenbaugruppe des Vorratsbehälters integriert sein. Dadurch ergibt sich ein besonders kompakter und einfacher Aufbau des Schleuderdüngerstreuers, der damit kostengünstig herzustellen ist.

Ein mechanischer Anschlag oder ein Referenzschalter kann zur Erfassung einer Referenzposition des Schiebers vorgesehen sein. Dadurch kann die absolute Position des Schiebers besonders genau erfasst werden, wodurch die Dosierung noch präziser erfolgen kann. Eine Steuerung kann dazu vorgesehen sein, bei der Initialisierung des Schleuderdüngerstreuers den Antrieb so zu steuern, dass der Schieber gegen den mechanischen Anschlag oder den Referenzschalter gefahren wird. Wird dabei ein erhöhter Strom im Antrieb oder das Schalten des Referenzschalters festgestellt, so wird die aktuelle Position des Drehwinkelsensors erfasst und als Referenzposition in der Steuerung festgehalten. Hiervon ausgehend sind dann alle folgenden Bewegungen des Schiebers absolut referenziert.

Der Drehwinkelsensor kann einen Drehgeber mit einer optischen oder magnetischen Abtastung umfassen. Dadurch ist eine genaue und berührungsfreie Erfassung der Schieberposition möglich.

Weitere Merkmale und Vorteile der Erfindung werden nachfolgend anhand der in den Figuren dargestellten Ausführungsbeispiele erläutert. Dabei zeigt:
- Fig. 1: ein Ausführungsbeispiel eines Schleuderdüngerstreuers in einer perspektivischen Ansicht;
- Fig. 2-3: die Dosieröffnung des Schleuderdüngerstreuers aus der Fig. 1 bei einer wenig geöffneten Position in einer Draufsicht;
- Fig. 4-5: die Dosieröffnung des Schleuderdüngerstreuers aus Fig. 1 bei einer fast vollständig geöffneten Position in einer Draufsicht; und
- Fig. 6-7: die Dosieröffnung des Schleuderdüngerstreuers aus Fig. 1 bei einer mittleren Position in einer Draufsicht.

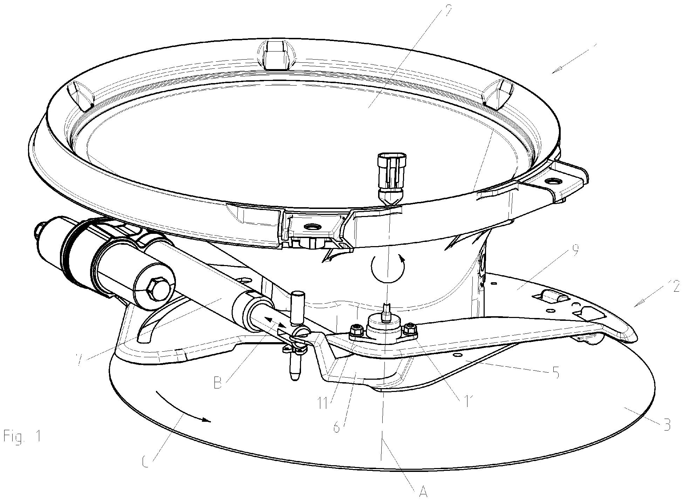

In der Fig. 1 ist ein Ausführungsbeispiel eines Schleuderdüngerstreuers 1 in einer perspektivischen Ansicht gezeigt. Zu sehen ist ein trichterförmiger Vorratsbehälter 2, der im Betrieb mit Dünger aufgefüllt ist (hier nicht dargestellt).

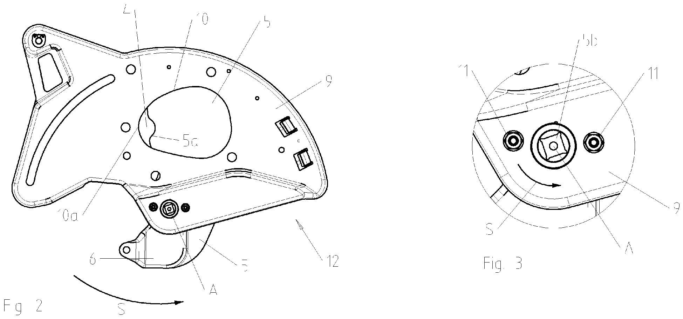

Nach unten ist der Vorratsbehälter 2 mit der Bodenplatte 9 abgeschlossen, in der sich eine feste Öffnung befindet. Gegenüber dieser festen Öffnung ist der Schieber 5 um die Achse A scherenartig schwenkbar angeordnet (weiter unten genauer in Bezug auf die Fig. 2-7 beschrieben). Der Schieber 5 ist über einen Gelenkbolzen mit der Bodenplatte 9 verbunden und rotierbar gelagert. Ferner ist der Schieber 5 einteilig mit dem Hebel 6 als umgeformtes Blechbauteil ausgebildet, wobei der Hebel 6 bezüglich der Schieberdrehachse A auf der gegenüberliegenden Seite zum Schieber 5 verläuft. Am äußeren Ende des Hebels 6 greift der Antrieb 7 an, der hier als linear arbeitender Elektromotor ausgebildet ist. Durch eine Betätigung des Antriebs 7 verfährt dieser entlang der Richtung B und dreht so über den Hebel 6 den Schieber um die Schieberdrehachse A.

Dadurch wird die in den Fig. 2, 4 und 6 dargestellte Dosieröffnung 5 in der Größe so verändert, dass die gewünschte Düngermenge auf die Schleuderscheibe 3 gelangt (Verteilorgan). Die Schleuderscheibe 3 dreht sich in Pfeilrichtung C und verteilt über daran angeordnete Wurfarme D den Dünger auf dem Feld (hier nicht dargestellt).

Darüber hinaus ist zu sehen, dass der Drehwinkelsensor 8 an der Schieberdrehachse A angeordnet ist. Das Gehäuse des Drehwinkelsensors 8 ist über zwei Schrauben 11 fest mit der Bodenplatte 9 des Vorratsbehälters 2 verbunden. Dem gegenüber ist ein drehbares Teil des Drehwinkelsensors 8 mit dem Schieber 5 direkt verbunden und kann so die genaue Drehlage des Schiebers 5 gegenüber der Schieberdrehachse A erfassen.

Der Drehwinkelsensor 8 ist hier als Potentiometer (verstellbarer Ohmscher Widerstand) ausgebildet, wobei über die Schieberposition 5 der Schleifkontakt des Potentiometers verstellt und damit dessen Widerstand verändert wird. Über eine Messung des Widerstandes kann dann auf die Schieberposition geschlossen werden.

Über entsprechende elektrische Leitungen ist sowohl der Drehwinkelsensor 8 als auch der Antrieb 7 mit einer Steuerung verbunden, die den Widerstand des Drehwinkelsensors 8 erfasst und darauf basierend den Antrieb 7 regelt.

Der Widerstand des Drehwinkelsensors 8 kann bereits als absolute Position herangezogen werden. Um darüber hinaus die absolute Position des Schiebers 5 noch genauer zu erfassen ist ein mechanischer Anschlag oder ein Referenzschalter denkbar, mit dem der Schieber 5 in einer Extremposition in Kontakt tritt. Des Weiteren ist auch denkbar, dass der Drehwinkelsensor 8 ein optischer oder magnetischer Drehgeber ist. Dadurch kann die Schieberposition noch genauer erfasst werden.

In den Fig. 2 und 3 ist die Bodenbaugruppe 12 des Vorratsbehälters 2 des Ausführungsbeispiels aus der Fig. 1 als Ganzes bzw. im Detail in einer Draufsicht dargestellt. Zu sehen ist, dass der Scheiber 5 an der Bodenplatte 9 mittels der Schieberwelle 5b (Gelenkbolzen) drehbar gelagert ist (im Detail in der Fig. 3 zu sehen). Dadurch kann der Schieber 5 um die Schieberdrehachse A in Pfeilrichtung S geschwenkt werden. Weiterhin ist zu sehen, dass die Bodenplatte 9 eine feste Öffnung 10 aufweist, gegenüber der der Schieber 5 scherenartig verstellbar ist. Die Dosieröffnung 4 ergibt sich durch Anteil der festen Öffnung 10, welche nicht durch den Schieber 5 verdeckt wird. Anders ausgedrückt wird die Dosieröffnung 4 einerseits durch die Kante 10a der festen Öffnung 10 und andererseits durch die Kante 5a des Schiebers 5 gebildet.

Der zuvor in Bezug auf die Fig. 1 beschriebene Drehwinkelsensor 8 ist konzentrisch zur Drehachse A am Ende der Schieberwelle 5b angeordnet. Das Gehäuse des Drehgebers 8 ist durch die Schrauben 11 feststehend mit der Bodenplatte 9 bzw. der gegenüber dem Gehäuse drehbare Teil ist mit der Schieberwelle 5b verbunden. Da die Schieberwelle 5b feststehend mit dem Schieber 5 verbunden ist, kann mit dem daran angeschlossenen Drehwinkelsensor 8 die Schieberposition um die Schieberdrehachse A genau und einfach erfasst werden.

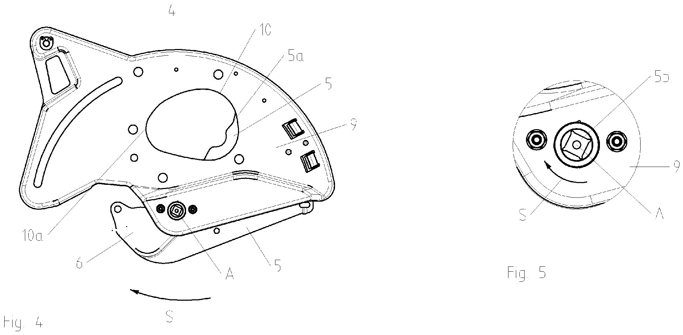

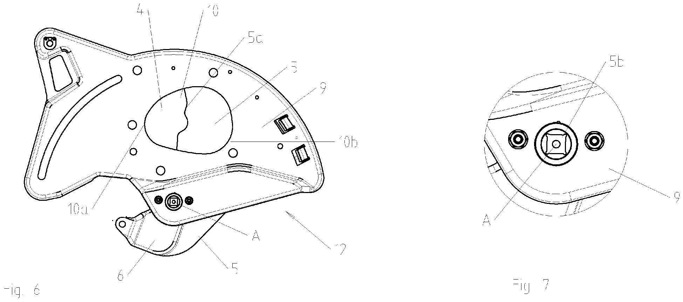

In den Fig. 4-5 bzw. 6-7 ist ebenfalls die Bodenbaugruppe 12 des Vorratsbehälters 2 aus der Fig. 1 in einer Draufsicht dargestellt. In den Fig. 5 und 7 sind jeweils Detailansichten der Fig. 4 bzw. 6 im Bereich der Schieberwelle 5b dargestellt.

Die Fig. 4 und 5 unterscheiden sich von den Fig. 2 und 3 dadurch, dass sich der Schieber 5 in einer fast vollständig geöffneten Position befindet. Zu sehen ist, dass der Schieber 5 fast vollständig nach rechts verschoben ist. Dadurch ergibt sich mit der Kante 5a des Schiebers und der Kante 10a der festen Öffnung 10 eine besonders große Dosieröffnung 4. Weiterhin ist in der Fig. 5 zu sehen, dass die Schieberwelle 5b gegenüber der Darstellung in der Fig. 3 in Pfeilrichtung S verdreht ist und so die fast vollständig geöffnete Schieberposition mit dem Drehwinkelsensor 8 erfasst werden kann.

Die Fig. 6 und 7 unterscheiden sich von den Fig. 2 und 3 dadurch, dass sich der Schieber 5 in einer mittleren Position befindet. Zu sehen ist, dass die Kante 5a des Schiebers 5 und die Kante 10a der festen Öffnung 10 eine mittelgroße Dosieröffnung bilden. Die Schieberwelle 5b ist in der Fig. 7 gegenüber der Fig. 3 in eine mittlere Position verdreht, wodurch mit dem Drehwinkelsensor 8 die mittlere Schieberposition erfasst werden kann.

Die in den Fig. 3, 5 und 7 dargestellten Drehpositionen der Schieberwelle 5b wird durch den in der Fig. 1 dargestellten Drehwinkelsensor 8 erfasst. Da der Drehwinkelsensor 8 über die Schieberwelle 5b direkt und ohne Spiel mit dem Schieber 5 verbunden ist, kann die Position des Schiebers 5 besonders genau erfasst werden. Dadurch kann die von der Kante 5a des Schiebers 5 und der Kante 10a der Öffnung 10 gebildete Dosieröffnung mit einer Steuerung des Schleuderdüngerstreuers sehr präzise eingestellt und die Düngermenge besonders präzise reguliert werden.

Es versteht sich, dass in den zuvor beschriebenen Ausführungsbeispielen genannte Merkmale nicht auf diese speziellen Kombinationen beschränkt sind und in beliebigen anderen Kombinationen im Rahmen der beigefügten Ansprüchen möglich sind.

## Patentansprüche

1. Schleuderdüngerstreuer (1) mit einem Vorratsbehälter (2) für Dünger und einem Verteilorgan (3) zum Ausbringen des Düngers auf ein Feld, wobei eine verstellbare Dosieröffnung (4) zur Dosierung des Düngers auf das Verteilorgan (3) mit einem Schieber (5) ausgebildet ist, der mit einem Hebel (6) und einem daran angreifenden Antrieb (7) um eine Schieberdrehachse (A) schwenkbar ist, **dadurch gekennzeichnet, dass** ein Drehwinkelsensor (8) zur Erfassung der Schieberposition an der Schieberdrehachse (A) angeordnet ist.

2. Schleuderdüngerstreuer (1) nach Anspruch 1, wobei der Drehwinkelsensor (8) konzentrisch zur Schieberdrehachse (A) angeordnet ist.

3. Schleuderdüngerstreuer (1) nach Anspruch 1 oder 2, wobei der Drehwinkelsensor (8) an einem Ende einer Schieberwelle (5b) angeordnet ist, die längs der Schieberdrehachse (A) verläuft.

4. Schleuderdüngerstreuer (1) nach wenigstens einem der vorangegangenen Ansprüche, wobei der Drehwinkelsensor (8) ein Potentiometer umfasst.

5. Schleuderdüngerstreuer (1) nach wenigstens einem der vorangegangenen Ansprüche, wobei die Dosieröffnung (4) durch eine Platte (9) mit einer festen Öffnung (10) und den Schieber (5) gebildet wird, wobei der Schieber (5) scherenartig gegenüber der festen Öffnung (10) verstellbar ist.

6. Schleuderdüngerstreuer (1) nach Anspruch 5, wobei ein feststehender Teil des Drehwinkelsensors (8) mit der Platte (9) und ein drehbarer Teil des Drehwinkelsensors (8) mit dem Schieber (5) verbunden ist.

7. Schleuderdüngerstreuer (1) nach wenigstens einem der vorangegangenen Ansprüche, wobei die Dosieröffnung (4) in eine Bodenbaugruppe (12) des Vorratsbehälters (2) integriert ist.

8. Schleuderdüngerstreuer (1) nach wenigstens einem der vorangegangenen Ansprüche, wobei ein mechanischer Anschlag oder ein Referenzschalter zur Erfassung einer Referenzposition des Schiebers (5) vorgesehen ist.

9. Schleuderdüngerstreuer (1) nach wenigstens einem der vorangegangenen Ansprüche, wobei der Drehwinkelsensor (8) einen Drehgeber mit einer optischen oder magnetischen Abtastung umfasst.

10. Schleuderdüngerstreuer (1) nach wenigstens einem der vorangegangenen Ansprüche, wobei der Antrieb (7) ein elektrischer Linearantrieb ist.

11. Schleuderdüngerstreuer (1) nach wenigstens einem der vorangegangenen Ansprüche, wobei der Vorratsbehälter (2) wenigstens teilweise als sich nach unten verjüngender Trichter ausgebildet ist, an dessen unterem Ende die Dosieröffnung (4) angeordnet ist.

12. Schleuderdüngerstreuer (1) nach wenigstens einem der vorangegangenen Ansprüche, wobei das Verteilorgan (3) eine Schleuderscheibe umfasst.

## Claims

1. Centrifugal fertilizer spreader (1) comprising a storage container (2) for fertilizer and a distributor element (3) for distributing the fertilizer on a field, wherein an adjustable metering opening (4) for metering the fertilizer to the distributor element (3) is formed with a slide (5) which can be pivoted about a slide rotation axis (A) by way of a lever (6) and a drive (7) which acts on the said lever, **characterized in that** a rotation angle sensor (8) for detecting the slide position is arranged on the slide rotation axis (A).

2. Centrifugal fertilizer spreader (1) according to Claim 1, wherein the rotation angle sensor (8) is arranged concentrically with respect to the slide rotation axis (A).

3. Centrifugal fertilizer spreader (1) according to Claim 1 or 2, wherein the rotation angle sensor (8) is arranged on one end of a slide shaft (5b) which runs along the slide rotation axis (A).

4. Centrifugal fertilizer spreader (1) according to at least one of the preceding claims, wherein the rotation angle sensor (8) comprises a potentiometer.

5. Centrifugal fertilizer spreader (1) according to at least one of the preceding claims, wherein the metering opening (4) is formed by a plate (9), which has a fixed opening (10), and the slide (5), wherein the slide (5) can be adjusted in a scissors-like manner in relation to the fixed opening (10).

6. Centrifugal fertilizer spreader (1) according to Claim 5, wherein a stationary part of the rotation angle sensor (8) is connected to the plate (9), and a rotatable part of the rotation angle sensor (8) is connected to the slide.

7. Centrifugal fertilizer spreader (1) according to at least one of the preceding claims, wherein the metering opening (4) is integrated into a floor assembly (12) of the storage container (2).

8. Centrifugal fertilizer spreader (1) according to at least one of the preceding claims, wherein a mechanical stop or a reference switch is provided for detecting a reference position of the slide (5).

9. Centrifugal fertilizer spreader (1) according to at least one of the preceding claims, wherein the rotation angle sensor (8) comprises a rotary encoder with an optical or magnetic scanning arrangement.

10. Centrifugal fertilizer spreader (1) according to at least one of the preceding claims, wherein the drive (7) is an electrical linear drive.

11. Centrifugal fertilizer spreader (1) according to at least one of the preceding claims, wherein the storage container (2) is formed at least partially as a funnel which tapers in the downward direction, the metering opening (4) being arranged at the lower end of the said funnel.

12. Centrifugal fertilizer spreader (1) according to at least one of the preceding claims, wherein the distributor element (3) comprises a centrifugal disc.

## Revendications

1. Epandeur d'engrais centrifuge (1) comportant un réservoir de stockage (2) destiné à des engrais et un organe de distribution (3) destiné à appliquer l'engrais sur un champ, dans lequel il est prévu une ouverture de dosage (4) réglable destinée à doser l'engrais vers l'organe de distribution (3), comportant une vanne (5) qui peut pivoter au moyen d'un levier (6) et d'un mécanisme d'entraînement (7) s'engageant sur celui-ci autour d'un axe de rotation de vanne (A), **caractérisé en ce qu'**il est prévu un capteur d'angle de rotation (8) destiné à détecter la position de la vanne sur l'axe de rotation de vanne (A).

2. Epandeur d'engrais centrifuge (1) selon la revendication 1, dans lequel le capteur d'angle de rotation (8) est disposé concentriquement par rapport à l'axe de rotation de vanne (A).

3. Epandeur d'engrais centrifuge (1) selon la revendication 1 ou 2, dans lequel le capteur d'angle de rotation (8) est disposé à une extrémité d'un arbre de vanne (5b) qui s'étend le long de l'axe de rotation de vanne (A).

4. Epandeur d'engrais centrifuge (1) selon au moins l'une des revendications précédentes, dans lequel le capteur d'angle de rotation (8) comprend un potentiomètre.

5. Epandeur d'engrais centrifuge (1) selon au moins l'une des revendications précédentes, dans lequel l'ouverture de dosage (4) est formée à travers une plaque (9) munie d'une ouverture fixe (10) et de la vanne (5), dans lequel la vanne (5) est réglable à la façon de ciseaux par rapport à l'ouverture fixe (10).

6. Epandeur d'engrais centrifuge (1) selon la revendication 5, dans lequel une partie stationnaire du capteur d'angle de rotation (8) est reliée à la plaque (9) et une partie tournante du capteur d'angle de rotation (8) est reliée à la vanne (5).

7. Epandeur d'engrais centrifuge (1) selon au moins l'une des revendications précédentes, dans lequel l'ouverture de dosage (4) est intégrée à un sous- ensemble inférieur (12) du réservoir de stockage (2).

8. Epandeur d'engrais centrifuge (1) selon au moins l'une des revendications précédentes, dans lequel il est prévu une butée mécanique ou un commutateur de référence destiné à détecter une position de référence de la vanne (5).

9. Epandeur d'engrais centrifuge (1) selon au moins l'une des revendications précédentes, dans lequel le capteur d'angle de rotation (8) comprend un codeur rotatif ayant un système de balayage optique ou magnétique.

10. Epandeur d'engrais centrifuge (1) selon au moins l'une des revendications précédentes, dans lequel le mécanisme d'entraînement (7) est un mécanisme d'entraînement électrique linéaire.

11. Epandeur d'engraisp centrifuge (1) selon au moins l'une des revendications précédentes, dans lequel le réservoir de stockage (2) est réalisé au moins partiellement sous la forme d'un entonnoir se rétrécissant vers le bas sur l'extrémité inférieure duquel est disposée l'ouverture de dosage (4).

12. Epandeur d'engrais centrifuge (1) selon au moins l'une des revendications précédentes, dans lequel l'organe de distribution (3) comprend un disque centrifuge.
